# EUROPÄISCHE PATENTSCHRIFT

(11) **EP 2 107 223 B1**
(45) Veröffentlichungstag und Bekanntmachung des Hinweises auf die Patenterteilung: **02.11.2011**
(21) Anmeldenummer: 09002265.8
(22) Anmeldetag: 18.02.2009
(51) Int. Cl.: F01N 3/20, F02M 25/07

(54) **Brennkraftmaschine mit einem Abgassystem, dem mittels einer Dosiereinheit ein Zusatzstoff zudosierbar ist**
Combustion engine with an exhaust gas system to which an additive can be added with a metering unit
Moteur à combustion interne doté d'un système de gaz d'échappement, dans lequel un additif peut être ajouté à l'aide d'un dispositif de dosage

(30) Priorität: 18.03.2008 DE 102008014852
(43) Veröffentlichungstag der Anmeldung: 07.10.2009
(73) Patentinhaber: MAN Truck & Bus AG, 80995 München (DE)
(72) Erfinder: Held, Wolfgang, Dr., 91289 Schabelwaid (DE); Raab, Gottfried, 4320 Perg (AT)

(56) Entgegenhaltungen:
- EP-A- 0 878 608
- WO-A-2008/065390
- WO-A-2008/066482
- DE-A1- 4 200 514
- DE-A1- 19 960 976
- US-A1- 2005 011 184
- US-B1- 6 361 754

## Beschreibung

### Technisches Gebiet

Die Erfindung betrifft eine Brennkraftmaschine mit einem Abgassystem, in das Abgas der Brennkraftmaschine einleitbar und innerhalb dem eine Wärmeübertrageinheit vorgesehen ist, durch die dem Abgassystem Wärme entnehmbar und in eine Prozesskammer eines Abgasnachbehandlungssystems einbringbar ist. Hierbei ist ein aus einem Vorratsbehälter in die Prozesskammer einbringbarer Zusatzstoff, bei dem mittels der dem Abgassystem entnommenen Wärme eine zumindest teilweise Aggregatzustandsänderung herbeiführbar ist, mit Hilfe einer der Prozesskammer im Abgasnachbehandlungssystem nachgeschalteten Dosiereinheit dem Abgassystem zudosierbar.

### Stand der Technik

Die Minimierung der Partikel- und der NOₓ-Emissionen konnte bis zu den gesetzlich festgelegten Euro-2-Grenzwerten für Nutzfahrzeuge allein durch Optimierung der Verbrennung, das heißt durch innermotorische Maßnahmen, erreicht werden. Auch die Euro-3-Grenzwerte sind ohne Abgasnachbehandlung erreichbar.

Um demgegenüber auch die Abgasgrenzwerte Euro-4 und insbesondere Euro-5 sowie weitere zukünftige Abgasgrenzwerte für Nutzfahrzeuge einhalten zu können, ist in Ergänzung zu motorinternen Maßnahmen ferner der Einsatz von Abgasnachbehandlungssystemen erforderlich. Um auch zukünftig die vom Gesetzgeber festgelegten Abgasgrenzwerte erfüllen zu können, werden unterschiedliche technische Lösungskonzepte für Kraftfahrzeuge angeboten. Eine dieser technischen Lösungen sieht die Partikelreduktion durch motorinterne Maßnahmen kombiniert mit einer NOₓ-Absenkung durch eine Abgasnachbehandlung mittels selektiver katalytischer Reduktion vor (SCR-Technologie).

Zentrales Element eines SCR-Systems ist ein Katalysator, der unter Zuhilfenahme von Ammoniak die Stickoxide in Wasserdampf und Stickstoff umwandelt. Hierbei wird dem Abgas vor Erreichen des SCR-Katalysators ein Zusatzstoff, aus dem das reduzierende Ammoniak erzeugbar ist, oder Ammoniak selbst als Reduktionsmittel mit Hilfe einer Einspritzdüse zugeführt.

Als Zusatzstoffe zur Bereitstellung des benötigten Reduktionsmittels stehen grundsätzlich reines Ammoniak, Ammoniumkarbonat oder eine Hamstoffwasseriösung zur Verfügung. In diesem Zusammenhang wird zur Zeit der Verwendung des ungiftigen, geruchsneutralen Harnstoffes der Vorrang vor anderen Stoffen zur Erzeugung des für die Reduktion benötigten Ammoniaks eingeräumt. Der verwendete Harnstoff zersetzt sich bei Temperaturen ab ca. 200°C unter Bildung von Ammoniak und Kohlendioxid. Das Verfahren beruht hierbei auf dem Prinzip der Eindüsung von Harnstoff in den heißen Dieselabgasstrom. Der im Harnstoff enthaltene Ammoniakanteil verbindet sich an der Oberfläche eines Katalysators aus Titan-, Wolfram- und/oder Vanadiumoxid mit den im Abgas vorhandenen Stickoxiden, oxidiert mit dem Sauerstoff und bildet unter Einsatz eines angeschlossenen oder integrierten Oxidationskatalysators die unschädlichen Luftbestandteile Stickstoff und Wasser. Wie die vorliegeriden Ausführungen zeigen, erfolgt die thermohydrolytische Aufspaltung der Harnstoffwasserlösung unter Abgabe von Ammoniak als Reduktionsmittel durch Aufnahme von Wärme.

In diesem Zusammenhang ist es aus der DE 34 22 175 A1 bekannt, das für die Reaktion im Abgasstrang benötigte Ammoniak bereitzustellen, indem der für die eine Ammoniakabspaltung benötigte Zusatzstoff in einem Vorratsbehälter bevorratet, dieser Zusatzstoff in eine Zersetzungskammer eingebracht und dort erwärmt wird, damit das Ammoniak schließlich bereits in abgespaltener Form in den Abgasstrang eingebracht werden kann. Als Wärmequellen zur Erwärmung des Stoffes aus dem schließlich das Ammoniak abgespalten wird, werden in der DE 34 22 175 A1 elektrische Heizungen sowie Infrarotstrahler vorgeschlagen.

Ergänzend zu der im vorherigen Absatz erläuterten Veröffentlichung ist aus der DE 42 00 514 A1 ein Verfahren zur katalytischen Entstickung von Abgasen bekannt, bei dem ebenfalls zur schnelleren Verteilung der reaktiven Bestandteile im Abgasstrang zunächst in einer vorgestalteten Kammer eine chemische Verbindung in seine gasförmigen Zersetzungsprodukte, unter anderem in Ammoniak, aufgespalten wird. Neben der schnelleren Verteilung der reaktiven Stoffe im Abgas und der damit verbundenen schneller ablaufenden Reaktion soll das beschriebene Verfahren eine gleichmäßigere und vollständige Reaktion des gasförmigen Ammoniaks mit dem NOₓ und damit eine höhere Effizienz der Abgasnachbehandlung sicherstellen. Des Weiteren ist aus der vorgenannten Schrift die Verwendung von Harnstoff als chemische Verbindung, aus der in einem der Eindüsung in den Abgasstrang vorgeschaltenen Verfahrensschritt unter Wärmeeinwirkung Ammoniak abgespalten wird, bekannt.

Unter Berücksichtigung des zuvor beschriebenen Standes der Technik liegt der Erfindung die Aufgabe zugrunde, eine Vorrichtung anzugeben, die es ermöglicht, die Erwärmung einer chemischen Verbindung beziehungsweise die Ammoniakabspaltung in einem der Eindüsung in den Abgasstrang vorgeschalteten Stufe derart durchzuführen, dass sich die hierfür benötigten Anlagenkomponenten auf einfache Weise in den herkömmlichen Aufbau einer Brennkraftmaschine integrieren lassen. Hierbei sollte insbesondere sichergestellt werden, dass der für die Anlagenkomponenten zur Erwärmung des Zusatzstoffes benötigten Komponenten eine möglichst geringen Bauraum beanspruchen. Des Weiteren soll die erfindungsgemäße technische Lösung sicherstellen, dass eine ausreichende und effektive Erwärmung des Zusatzstoffes auch in kritischen Betriebszuständen der Brennkraftmaschine mit niedrigen Abgastemperaturen erfolgt.

Die der Erfindung zugrunde liegende Aufgabe wird mit Hilfe einer Brennkraftmaschine mit einem Abgassystem gemäß der im Anspruch 1 angegebenen technischen Ausführung gelöst. Vorteilhafte Ausführungsformen der Erfindung sind Gegenstand der abhängigen Ansprüche und werden in der folgenden Beschreibung unter Bezugnahme auf die Figuren näher erläutert.

Die Erfindung betrifft eine Brennkraftmaschine mit einem Abgassystem, in das Abgas der Brennkraftmaschine einleitbar und innerhalb dem eine Wärmeübertragereinheit vorgesehen ist, durch die dem Abgassystem Wärme entnehmbar und in eine Prozesskammer eines Abgasnachbehandlungssystems einbringbar ist. Hierbei ist ein aus einem Vorratsbehälter in die Prozesskammer einbringbarer Zusatzstoff, bei dem mittels der dem Abgassystem entnommenen Wärme eine zumindest teilweise Aggregatzustandsänderung herbeiführbar ist, mit Hilfe einer der Prozesskammern im Abgasnachbehandlungssystem nachgeschalteten Dosiereinheit dem Abgassystem zudosierbar ist. Die Erfindung zeichnet sich dadurch aus, dass die Wärmeübertragereinheit in einer Abgasrückführung des Abgassystems angeordnet ist, in die Abgas der Brennkraftmaschine einleitbar und über die zumindest ein Teil des Abgases einer Verbrennungsluftzufuhr der Brennkraftmaschine zuleitbar ist.

Grundsätzlich stellt die interne Abgasrückführung eine Möglichkeit zur Senkung der Abgasemission, insbesondere der Stickoxidemission dar. Hierbei wird der angesaugten Luftmenge ein Teil der Abgase über eine geeignete Wahl der Ventilsteuerzeiten zugemischt, wodurch der Sauerstoffanteil der Frischladungen im Zylinder reduziert und dadurch die spezifische Wärmekapazität erhöht wird. Dies bewirkt eine Senkung der Verbrennungstemperatur und damit eine Reduzierung der Stickoxidemission. Gleichzeitig wird durch die Zuführung eines Teils der Abgase zum Verbrennungsvorgang die insgesamt ausgestoßene Abgasmenge reduziert.

Eine weitere Effizienzsteigerung des Systems ist insbesondere dadurch möglich, dass das über die Abgasrückführung der Verbrennungszuluft zugeleitete Abgas mit Hilfe eines entsprechenden Abgaswärmetauschers gekühlt wird. Die dem in der Abgasrückführung befindliche entzogene Wärme kann hierbei entweder für eine schnellere Motorerwärmung, insbesondere in der Startphase, oder aber zur Erwärmung weiterer Anlagenkomponenten, wie etwa eines Abgasnachbehandlungssystems, genutzt werden. Mit dem beschriebenen erfindungsgemäßen System soll die Nutzung eines Abgasnachbehandlungssystems auf besonders effektive Weise ermöglicht werden.

Die erfindungsgemäße technische Lösung beruht darauf, dass der Abgasrückführung mit Hilfe einer Wärmeübertragereinheit Wärme entzogen und diese Wärme einer Prozesskammer eines Abgasnachbehandlungssystems zugeführt wird. Wesentlich dabei ist, dass die Prozesskammer derart ausgeführt ist, dass ihr aus einem Vorratsbehälter ein Zusatzstoff zuleitbar ist, dessen Aggregatzustand aufgrund der Erwärmung in der Prozesskammer verändert wird. Anschließend wird der nunmehr vorzugsweise zumindest teilweise in den dampf- und/oder gasförmigen Zustand überführte Zusatzstoff, insbesondere das abgespaltene Ammoniak, über eine entsprechende Eindüsung in den Abgasstrang des Abgassystems eingedüst. Um eine kompakte Bauform zu erreichen, ist die Wärmeübertragereinheit direkt in die Abgasrückführung integriert.

Die Erfindung sieht vor, dass die Prozesskammer über Mittel verfügt, durch die die Eindüsung eines Abgasteilstroms als Trägerstrom realisiert wird. Der aus der Abgasrückführung abgeleitete Trägerstrom wird in diesem Fall in die Prozesskammer eingedüst und führt den zumindest teilweise in den dampf- und/oder gasförmigen Zustand überführten Zusatzstoff in den Bereich weiterer Komponenten des Abgasnachbehandlungssystems, in denen der Zusatzstoff mit den Inhaltsstoffen des Abgases reagiert.

In einer speziellen Ausführungsform der Erfindung ist die Prozesskammer, in der die Aggregatzustandsänderung des Zusatzstoffes unter Abspaltung von Ammoniak stattfindet, direkt in die Wärmeübertrageeinheit integriert. Der hohe Integrationsgrad der Anlagenkomponenten Wärmeübertrageeinheit und Prozesskammer führt letztendlich dazu, dass eine Kammer zur Vorerwärmung eines Zusatzstoffes unter Abspaltung von Ammoniak besonders platzsparend ausgeführt und direkt in eine Motorbaueinheit integrierbar ist.

Eine ganz spezielle Weiterbildung der Erfindung sieht vor, dass die Wärmeübertragereinheit und die Prozesskammer in Form eines Rohr-in-Rohr-Wärmetauschers ausgeführt sind. Vorzugsweise bildet hierbei das Innenrohr die Begrenzungswand zwischen der außenliegenden Wärmeübertragereinheit und der innenliegenden Prozesskammer. Auf diese Weise wird der in der Abgasrückführung strömende Abgasstrom außen an der Begrenzungswand der Prozesskammer entlang geführt. Dies ermöglicht eine effiziente Erwärmung der Prozesskammer und des in die Prozesskammer einbrachten Zusatzstoffes. Vorzugsweise handelt es sich bei dem in die Prozesskammer eingebrachten Zusatzstoff um einen flüssigen Zusatzstoff, insbesondere eine wässrige Harnstofflösung, oder einen Feststoff, der zumindest teilweise Harnstoff, Cyanursäure, Ammoniumcarbonat oder Ammoniumcarbanat enthält.

Die erfindungsgemäße Ausführung einer Abgasrückführung, in die eine Wärmeübertragereinheit mit innenliegender Prozesskammer zur Erzeugung eines ammoniakhaltigen Gases integriert ist, gewährleistet einerseits eine effektive Abkühlung der Abgase innerhalb der Abgasrückführung und stellt andererseits ausreichend viel Energie zur Umwandlung des Zusatzstoffes in Ammoniak zur Verfügung. Insbesondere die bereits beschriebene Rohr-in-Rohr-Ausführung einer Wärmeübertragereinheit mit innenliegender Prozesskammer gewährleistet eine hohe Prozesssicherheit auch in kritischen Betriebszuständen der Brennkraftmaschine, also insbesondere in Betriebszuständen, die sich durch vergleichsweise niedrige Abgastemperaturen auszeichnen. Derartige Betriebszustände treten sowohl in der Startphase einer Brennkraftmaschine als auch bei so genannten Sägezahnbelastungen, wie sie beispielsweise beim innerstädtischen Betrieb eines Fahrzeugs vorkommen, auf.

Die bevorzugte Ausführungsform der Erfindung, die die Integration der Prozesskammer in die Wärmeübertragereinheit in Form eines Rohr-in-Rohr-Wärmetauschers vorsieht, bietet darüber hinaus den Vorteil einer verhältnismäßig guten Wärmespeicherung innerhalb der Prozesskammer. Die thermischen Eigenschaften der Prozesskammer, insbesondere die Wärmeleitung und damit auch die Wärmeabstrahlung der Prozesskammer lassen sich durch eine geeignete Wahl der Rohrdimensionierung optimieren. In diesem Fall wird das Innenrohr, das auf bevorzugte Weise die Begrenzungswand der Prozesskammer bildet, derart dimensioniert, dass einerseits eine effektive Erwärmung der Prozesskammer beziehungsweise des in die Prozesskammer eingebrachten Zusatzstoffes sichergestellt wird, und dass andererseits auch bei nur geringen Abgasrückführungsraten eine rasche Auskühlung der Prozesskammer sicher vermieden wird.

Weiterhin sieht eine ganz spezielle Weiterbildung der Erfindung vor, dass die Begrenzungswand der Prozesskammer auf der Innenseite zumindest abschnittsweise mit Titandioxid (TiO₂) beschichtet ist, um die Abspaltung eines ammoniakhaltigen Gases vom Zusatzstoff positiv zu beeinflussen.

Das die Prozesskammer verlassende ammoniakhaltige Fluid, das vorzugsweise aus einer wässrigen Lösung, alternativ aus einem Feststoff, abgespalten worden ist, wird über Rohr- und/oder Schlauchleitungen zu einer Dosiereinheit gefördert. Grundsätzlich erfolgt die Förderung des Zusatzstoffes vom Vorratsbehälter zur Prozesskammer und/oder von der Prozesskammer zur Dosiereinheit mit Hilfe einer Fördereinheit. Sofern es die Druckverhältnisse im Abgasnachbehandlungssystem erlauben ist es aber alternativ auch denkbar, dass die Förderung des Zusatzstoffes und/oder des ammoniakhaltigen Fluids alternativ durch ein Druckgefälle im System bewirkt wird.

Die Dosiereinheit ist im Abgasnachbehandlungssystem derart angeordnet, dass eine Eindüsung des ammoniakhaltigen Fluids in den Abgasstrang im Bereich der Reduktionskatalysatoren erfolgt. Bei einer vorteilhaften Weiterbildung der Erfindung verfügt die Dosiereinheit an der Eindüsungsstelle im Abgasstrang über eine Venturidüse. Durch das Vorsehen einer Venturidüse wird eine besonders schnelle und gleichmäßige Verteilung des ammoniakhaltigen Fluids in den Abgasstrang realisiert. Wie bereits eingangs beschrieben worden ist, bewirkt der im Bereich der Reduktionskatalysatoren eingedüste Ammoniak die Umwandlung von Stickoxiden und Sauerstoff zu Stickstoff und Wasser.

In einer Alternative der Erfindung wird der Prozesskammer zusätzlich zu dem Zusatzstoff zumindest zeitweise auch Umgebungsluft zugeführt. Die der Umgebung entnommene Luft wird hierbei mit Hilfe einer entsprechenden Gebläseeinheit angesaugt und in die Prozesskammer hineingeblasen. Mit Hilfe einer zentralen Steuerung wird die Zudosierung von Luft in die Prozesskammer in Abhängigkeit der Betriebsparameter der Brennkraftmaschine und/oder des Abgasnachbehandlungssystems geregelt.

Die Entnahme des Zusatzstoffes aus dem Vorratsbehälter sowie dessen Einleitung in die Prozesskammer erfolgt vorzugsweise mengengeregelt. Auch in diesem Fall sind in einer zentralen Steuereinheit Kennfelder hinterlegt, so dass die Zudosierung des Zusatzstoffes in Abhängigkeit der Betriebsparameter der Brennkraftmaschine und/oder des Abgasnachbehandlungssystems erfolgt.

In einer weiteren ganz speziellen Ausführungsform der Erfindung wird die in die Abgasrückführung integrierte Wärmeübertragereinheit, die eine Erwärmung der Prozesskammer sicherstellt, in Reihe mit wenigstens einer weiteren Wärmeübertragereinheit angeordnet. Die wenigstens eine weitere zusätzlich zur Abgasrückführung angeordnete Wärmeübertrageeinheit ermöglicht eine zusätzliche Wärmeentnahme und somit Abkühlung des Abgases in der Abgasrückführung. Auf diese Weise ist es denkbar, weitere Komponenten des Abgasnachbehandlungssystems, andere Wärmesenken der Antriebseinheit und/oder eines mit der Antriebseinheit angetriebenen Kraftfahrzeugs zu erwärmen. Eine derart zusätzlich vorgesehene Abkühlung des Abgases in der Abgasrückführung erfolgt zumindest zeitweise und vorzugsweise in Abhängigkeit bestimmter Betriebsparameter der Antriebseinheit, des Abgasnachbehandlungssystems und/oder des mit der Antriebseinheit angetriebenen Kraftfahrzeugs. Eine besondere Weiterbildung der Erfindung sieht in diesem Zusammenhang vor, dass mittels der zusätzlich der Abgasrückführung entnommenen Wärme die in einem Abgasnachbehandlungssystem vorgesehenen Katalysatoren, wie Reduktionskatalysatoren, Hydrolysekatalysatoren und/oder Oxydationskatalysatoren, insbesondere in Betriebszuständen, in denen die Abgastemperatur des die Katalysatoren umgebenden Abgases gering ist, wie bspw. bei einem im Stadtverkehr betriebenen Fahrzeug, erwärmt werden.

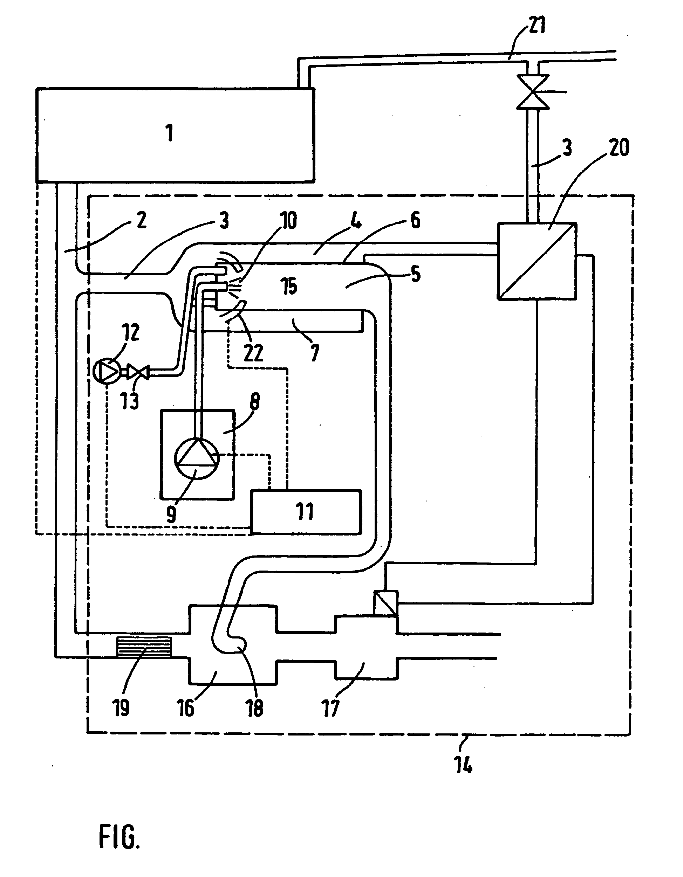

Im Folgenden wird die Erfindung anhand eines Ausführungsbeispiels ohne Beschränkung des allgemeinen Erfindungsgedankens unter Bezugnahme auf die Figur näher erläutert. Die dargestellte Figur zeigt schematisch die Abgasrückführung des Abgassystems bei einer Brennkraftmaschine eines Nutzfahrzeugs.

Die Figur zeigt schematisch die Brennkraftmaschine 1 eines Nutzfahrzeugs mit einem Abgassystem 2, das über eine Abgasrückführung 3 verfügt, mittels der dem die Brennkraftmaschine 1 verlassenden Abgasstrom zumindest ein Abgasteilstrom entnommen und der Verbrennungsluftzufuhr der Brennkraftmaschine 1 erneut zugeführt wird. Innerhalb der Abgasrückführung 3 ist eine Wärmeübertragereinheit 4 vorgesehen, mit Hilfe der dem innerhalb der Abgasrückführung 3 enthaltenen Abgas Wärme entnehmbar, das innerhalb der Abgasrückführung 3 befindliche Abgas also abkühlbar ist.

In die Wärmeübertragereinheit 4 ist eine Prozesskammer 5 integriert, wobei die äußere Begrenzungswand 6 der Prozesskammer 5 in Verbindung mit dem die Abgasrückführung 4 durchströmenden Abgas steht. Die Wärmeübertragereinheit 4 sowie die Prozesskammer 5 sind in Form eines Rohr-in-Rohr-Wärmetauschers ausgeführt, wobei der zwischen dem Außen- 7 und dem Innenrohr gebildete Strömungskanal zur Leitung des in der Abgasrückführung befindlichen Abgases dient und das Innenrohr die äußere Begrenzungswand 6 der Prozesskammer 5 bildet. Das Außenrohr 7 dient somit zur Leitung des Abgases und das Innenrohr zur Aufnahme der Prozesskammer 5.

Des Weiteren ist ein Vorratsbehälter 8 vorgesehen, in dem eine wässrige Harnstofflösung bevorratet wird. Die verwendete wässrige Harnstofflösung verfügt über einen 32,5%igen Harnstoffanteil (DIN 70070/AUS32) und ist unter dem Markennamen AdBlue^{®} bekannt. Im Bereich des Vorratsbehälters ist eine als Pumpe ausgeführte Fördereinheit 9 vorgesehen, mit der die wässrige Harnstofflösung aus dem Vorratsbehälter 8 über Rohr- und/oder Schlauchleitungen und eine Einleitstelle 10 in die Prozesskammer 5 einleitbar ist. Die Zudosierung der wässrigen Harnstofflösung in die Prozesskammer 5 erfolgt mengengeregelt und wird durch eine zentrale Steuereinheit 11 geregelt.

Zusätzlich ist eine Gebläseeinheit 12 mit einem Rückschlagventil 13 vorgesehen, so dass der Prozesskammer 5 zusätzlich zu der wässrigen Harnstofflösung Umgebungsluft zuführbar ist. In Abhängigkeit der Betriebsparameter der Brennkraftmaschine 1 sowie des Abgasnachbehandlungssystems 14 erfolgt unter Berücksichtigung entsprechend in der zentralen Steuereinheit 11 hinterlegter Kennfelder die Zudosierung von wässriger Harnstofflösung und/oder über das Gebläse 12 angesaugter Umgebungsluft in die Prozesskammer 5. Zusätzlich oder alternativ zu der Eindüsung von Umgebungsluft wird, wie in der Figur dargestellt,ein Abgasteilstrom aus der Abgasrückführung mit Hilfe von Eindüsungsmittel 22 in die Prozesskammer 5 eingeleitet. Der Trägerstrom reißt das sich innerhalb der Prozesskammer bildende ammoniakhaltige Gas mit sich und stellt dessen Transport zu den nachgeschalteten Komponenten des Abgasnachbehandlungssystems sicher.

Das heiße, durch die Abgasrückführung 3 strömende Abgas erwärmt aufgrund des Kontaktes mit der äußeren Begrenzungswand 6 der Prozesskammer 5 den Innenraum 15 der Prozesskammer 5, dessen Temperatur auf einen Wert von etwa 200°C ansteigt. Diese Erwärmung der Prozesskammer 5 bewirkt gleichzeitig eine Erwärmung der in die Prozesskammer 5 eingebrachten wässrigen Harnstofflösung. Aufgrund dieser Erwärmung findet schließlich die Abspaltung eines ammoniakhaltigen Gases statt. Das auf diese Weise erzeugte ammoniakhaltige Gas strömt aus der Prozesskammer 5 über Rohr- und/oder Schlauchleitungen zu einer Dosiereinheit 16, die den Ammoniakhaltigen Gasstrom bzw. das Ammoniak im Bereich eines Reduktionskatalysators 17 in das Abgassystem 2 eindüst. Um eine möglichst zügige und effektive Verteilung des ammoniakhaltigen Gases bzw. des Ammoniaks zu erreichen, verfügt die Dosiereinheit 16 über eine als Venturidüse ausgeführte Düse 18, die mit ihrer Ausströmöffnung in das Abgassystem 2 hineinragt. Der Einsatz einer Venturidüse 18 erfolgt immer dann, wenn es die Druckverhältnisse im System erfordern.

Innerhalb des Abgassystems 2 befinden sich wahlweise Filter- beziehungsweise Partikelabschreibeeinheiten und/oder weitere Katalysatoren. In dem in Verbindung mit der dargestellten Figur erläuterten Ausführungsbeispiel erfolgt die Eindüsung des ammoniakhaltigen Gases bzw. des Ammoniaks zwischen einem Partikelabscheider 19 und dem anschließenden Reduktionskatalysator 17 (SCR-Kat). Die Eindüsung des ammoniakhaltigen Gases bzw. des Ammoniaks in das Abgassystem 2 erfolgt nach dem Vergaserprinzip, wobei bevorzugt eine als Venturidüse ausgeführte Düse 18 an der Eindüsungsstelle verwendet wird.

Innerhalb der Prozesskammer 5 zersetzt sich die wässrige Harnstofflösung bei Temperaturen von ca. 200°C zu Ammoniak und Kohlendioxid. Nach der Eindüsung in das Abgassystem 2 verbindet sich das im ammoniakhaltigen Gas befindliche Ammoniak an der Spezialkeramikoberfläche des Katalysators aus Titan-, Wolfram- und Vanadiumoxid mit den im Abgas vorhandenen Stickoxiden, oxidiert mit dem Sauerstoff und bildet mit Hilfe des den Oxidationskatalysators die unschädlichen Luftbestandteile Stickstoff und Wasser.

Neben dem Rohr-in-Rohr-Wärmertauscher 4, 5 mit der integrierten Prozesskammer 5 zur Abspaltung eines ammoniakhaltigen Gases ist in die Abgasrückführung 3 der Brennkraftmaschine 1 ein weiterer Wärmeübertrager 20 integriert. In Bezug auf die Strömungsrichtung in der Abgasrückführung sind der Rohr-in-Rohr-Wärmetauscher 4, 5 und der weitere Wärmeübertrager 20 hintereinander in Reihe geschaltet. Mit Hilfe des weiteren Wärmeübertragers 20 wird dem den Rohr-in-Rohr-Wärmetauscher 4, 5 verlassenden Abgas in der Abgasrückführung 3 erneut Wärme entzogen und an ein den weiteren Wärmeübertrager 20 durchströmendes Wärmeträgermedium übertragen.

Innerhalb der Abgasrückführung 3 findet somit eine zweistufige Abkühlung des Abgases statt. Die mittels des weiteren Wärmeübertragers 20 der Abgasrückführung 3 entnommene Wärme kann grundsätzlich einer Vielzahl von Anlagenkomponenten innerhalb eines Fahrzeugs zur Verfügung gestellt werden. Vorzugsweise wird diese Wärme, insbesondere innerhalb der Startphase der Brennkraftmaschine 1 oder bei weiteren kritischen Betriebszuständen den im Abgas befindlichen Katalysatoren zugeführt, um diese über einen weitreichenden Betriebszeitraum auf der für die Reaktionen benötigten Betriebstemperaturen zu halten beziehungsweise zu bringen.

### Bezugszeichenliste

- 1: Brennkraftmaschine
- 2: Abgassystem
- 3: Abgasrückführung
- 4: Wärmeübertragereinheit
- 5: Prozesskammer
- 6: Äußere Begrenzungswand der Prozesskammer (Innenrohr)
- 7: Außenrohr
- 8: Vorratsbehälter
- 9: Fördereinheit
- 10: Einleitstelle
- 11: Steuereinheit
- 12: Gebläseeinheit
- 13: Rückschlagventil
- 14: Abgasnachbehandlungssystem
- 15: Prozesskammerinnenraum
- 16: Dosiereinheit
- 17: Reduktionskatalysator
- 18: Düse
- 19: Partikelabscheider
- 20: weiterer Wärmeübertrager
- 21: Verbrennungsluftzufuhr
- 22: Eindüsung Abgasteilstrom als Trägerstrom

## Patentansprüche

1. Brennkraftmaschine (1) mit einem Abgassystem (2), in das Abgas der Brennkraftmaschine (1) einleitbar und innerhalb dem eine Wärmeübertragereinheit (4) vorgesehen ist, durch die dem Abgassystem (2) Wärme entnehmbar und in eine Prozesskammer (5) eines Abgasnachbehandlungssystems (14) einbringbar ist, wobei ein aus einem Vorratsbehälter (8) in die Prozesskammer (5) einbringbarer Zusatzstoff, bei dem mittels der dem Abgassystem (2) entnommenen Wärme eine zumindest teilweise Aggregatzustandsänderung herbeiführbar ist, mit Hilfe einer der Prozesskammer (5) Im Abgasnachbehandlungssystem (14) nachgeschalteten Dosiereinheit (16) dem Abgassystem (2) zudosierbar ist, wobei die Wärmeübertragereinheit (4) in einer Abgasrückführung (3) des Abgassystems (2) angeordnet ist, in die Abgas der Brennkraftmaschine (1) einleitbar und über die zumindest ein Teil des Abgases einer Verbrennungsluftzufuhr (21) der Brennkraftmaschine (1) zuleitbar Ist, **dadurch gekennzeichnet, dass** eine Gebläseeinheit (12) vorgesehen ist, mit der aus der Umgebung entnommene Luft in die Prozesskammer (5) leitbar ist, und/oder dass die Prozesskammer (5) über wenigstens eine Einleitstelle (22) verfügt, über die zumindest ein Teilstrom des In der Abgasrückführung (3) befindlichen Abgases in die Prozesskammer (5) einleitbar ist.

2. Brennkraftmaschine nach Anspruch 1,
**dadurch gekennzeichnet, dass** der Zusatzstoff eine Substanz ist, bei der durch Zuführung von Wärme eine Abspaltung von Ammoniak herbeiführbar ist.

3. Brennkraftmaschine nach Anspruch 1 oder 2,
**dadurch gekennzeichnet, dass** der Zusatzstoff einen Feststoff aufweist, bei dem durch Zuführung von Wärme eine Abspaltung von Ammoniak herbeiführbar ist.

4. Brennkraftmaschine nach einem der Ansprüche 1 bis 3,
**dadurch gekennzeichnet, dass** die Prozesskammer (5) innerhalb der Wärmeübertragereinheit (4) angeordnet ist.

5. Brennkraftmaschine nach einem der Ansprüche 1 bis 4,
dass die Wärmeübertragereinheit (4) und die Prozesskammer (5) in Form eines Rohr-in-Rohr-Wärmeübertragers ausgeführt sind, dessen Innenrohr eine äußere Begrenzung (6) der Prozesskammer (5) bildet.

## Claims

1. Internal combustion engine (1) having an exhaust system (2) into which exhaust gas of the internal combustion engine (1) can be conducted and within which is provided a heat exchanger unit (4) by means of which heat can be extracted from the exhaust system (2) and introduced into a process chamber (5) of an exhaust-gas aftertreatment system (14), wherein an additive which can be introduced from a storage tank (8) into the process chamber (5), and in which an at least partial change in state of aggregation can be effected by means of the heat extracted from the exhaust system (2), can be dosed into the exhaust system (2) with the aid of a dosing unit (16) which is connected downstream of the process chamber (5) in the exhaust-gas aftertreatment system (14), wherein the heat exchanger unit (4) is arranged in an exhaust-gas recirculation line (3) of the exhaust system (2), into which exhaust-gas recirculation line exhaust gas of the internal combustion engine (1) can be conducted and via which exhaust-gas recirculation line at least a part of the exhaust gas can be conducted to a combustion air supply line (21) of the internal combustion engine (1), **characterized in that** a blower unit (12) is provided by means of which air extracted from the environment can be conducted into the process chamber (5), and/or **in that** the process chamber (5) has at least one introduction point (22) via which at least a partial flow of the exhaust gas situated in the exhaust-gas recirculation line (3) can be introduced into the process chamber (5).

2. Internal combustion engine according to Claim 1,
**characterized in that** the additive is a substance from which ammonia can be split off by means of a supply of heat.

3. Internal combustion engine according to Claim 1 or 2, **characterized in that** the additive has a solid substance from which ammonia can be split off by means of a supply of heat.

4. Internal combustion engine according to one of Claims 1 to 3, **characterized in that** the process chamber (5) is arranged within the heat exchanger unit (4).

5. Internal combustion engine according to one of Claims 1 to 4,
**characterized in that** the heat exchanger unit (4) and the process chamber (5) are designed in the form of a tube-in-tube heat exchanger whose inner tube forms an outer delimitation (6) of the process chamber (5).

## Revendications

1. Moteur à combustion interne (1) comprenant un système de gaz d'échappement (2) dans lequel du gaz d'échappement du moteur à combustion interne (1) peut être introduit et à l'intérieur duquel est prévue une unité d'échange de chaleur (4), par le biais de laquelle de la chaleur peut être prélevée du système de gaz d'échappement (2) et être introduite dans une chambre de traitement (5) d'un système de post-traitement des gaz d'échappement (14), un additif pouvant être introduit depuis un réservoir de stockage (8) dans la chambre de traitement (5), lequel additif pouvant subir une modification au moins partielle de son état physique au moyen de la chaleur prélevée du système de gaz d'échappement (2), pouvant être ajouté au système de gaz d'échappement (2) à l'aide d'une unité de dosage (16) montée en aval de la chambre de traitement (5) dans le système de post-traitement des gaz d'échappement (14), l'unité d'échange de chaleur (4) étant disposée dans une recirculation de gaz d'échappement (3) du système de gaz d'échappement (2), dans laquelle du gaz d'échappement du moteur à combustion interne (1) peut être introduit et par le biais de laquelle au moins une partie du gaz d'échappement peut être acheminé à une alimentation en air de combustion (21) du moteur à combustion interne (1), **caractérisé en ce qu'**il est prévu une unité de soufflante (12) avec laquelle de l'air prélevé dans l'environnement peut être guidé dans la chambre de traitement (5), et/ou **en ce que** la chambre de traitement (5) dispose d'au moins un point d'entrée (22) par le biais duquel au moins un courant partiel du gaz d'échappement se trouvant dans la recirculation de gaz d'échappement (3) peut être introduit dans la chambre de traitement (5).

2. Moteur à combustion interne selon la revendication 1, **caractérisé en ce que** l'additif est une substance qui peut subir un clivage d'ammoniac par apport de chaleur.

3. Moteur à combustion interne selon la revendication 1 ou 2, **caractérisé en ce que** l'additif présente une matière solide qui peut subir un clivage d'ammoniac par apport de chaleur.

4. Moteur à combustion interne selon l'une quelconque des revendications 1 à 3, **caractérisé en ce que** la chambre de traitement (5) est disposée à l'intérieur de l'unité d'échange de chaleur (4).

5. Moteur à combustion interne selon l'une quelconque des revendications 1 à 4, **caractérisé en ce que** l'unité d'échange de chaleur (4) et la chambre de traitement (5) sont réalisées sous forme d'un échangeur de chaleur à tubes concentriques, dont le tube intérieur forme une limite extérieure (6) de la chambre de traitement (5).
